# EUROPÄISCHE PATENTSCHRIFT

(11) **EP 3 545 568 B1**
(45) Veröffentlichungstag und Bekanntmachung des Hinweises auf die Patenterteilung: **09.12.2020**
(21) Anmeldenummer: 18711325.3
(22) Anmeldetag: 14.03.2018
(51) Int. Cl.: H01M 2/10, H01M 10/625, H01M 10/613, H01M 2/20

(54) **BATTERIESYSTEM**
BATTERY SYSTEM
SYSTÈME DE BATTERIE

(30) Priorität: 21.03.2017 DE 102017106068
(43) Veröffentlichungstag der Anmeldung: 02.10.2019
(73) Patentinhaber: Obrist Technologies GmbH, 6890 Lustenau (AT)
(72) Erfinder: OBRIST, Frank, 6900 Bregenz (AT); OBRIST, Oliver, 6850 Dornbirn (AT); GRAZ, Martin, 6890 Lustenau (AT)
(74) Vertreter: Kilchert, Jochen
(86) Internationale Anmeldenummer: PCT/EP2018/056380
(87) Internationale Veröffentlichungsnummer: WO 2018/172157

(56) Entgegenhaltungen:
- DE-A1-102012 208 509
- US-A1- 2012 244 393
- US-A1- 2013 004 808
- US-A1- 2013 192 807

## Beschreibung

Die Erfindung betrifft ein Batteriesystem mit den Merkmalen des Oberbegriffs des Patentanspruchs 1. Ein derartiges Batteriesystem ist beispielsweise aus der auf die Anmelderin zurückgehenden DE 10 2014 114 019 A1 bekannt.

Bei dem vorbekannten Batteriesystem ist vorgesehen, eine Verspannung des Gehäuses mit einem darin enthaltenen Zellenblock mittels eines aushärtenden Füllmaterials zu erreichen. Das Füllmaterial ist in einem Druckbeutel enthalten, der zwischen dem Zellenblock und dem Gehäuse angeordnet ist. Der Druckbeutel wird mit einem Überdruck beaufschlagt, so dass der Zellenblock innerhalb des Gehäuses fest verspannt ist. Das Füllmaterial härtet anschließend aus und festigt die Verspannung.

Ein ähnliches Batteriesystem offenbart US 2012/0244393 A1, wobei das Gehäuse des bekannten Batteriesystems aus einem Kautschuk-Material gebildet ist und sich unter Unterdruck nach innen verformt, um den Wärmeübergang zwischen den Batteriezellen und der Umgebung zu verbessern. Dem bekannte System mangelt es jedoch wegen des Gehäusematerials an guter Stabilität und Crashsicherheit.

Aus DE 10 2012 208 509 A1 ist eine Batteriezelle bekannt, die zur Überwachung des Ladezustands ("State of Charge" - SOC) und des Alterungszustands ("State of Health" - SOH) einer einzelnen Batteriezelle Kraftsensoren und einen Gasdrucksensor innerhalb des Zellengehäuses nutzt.

Im Rahmen der Weiterentwicklung hat es sich gezeigt, dass insbesondere seitens der Luftfahrtindustrie besondere Anforderungen an Batteriesysteme gestellt werden. Für den Einsatz in Luftfahrzeugen soll das Batteriesystem hinsichtlich seines Gewichts und seiner Festigkeit optimiert werden, wobei bestenfalls auch die Leistungsfähigkeit gesteigert wird.

Die Aufgabe der Erfindung besteht somit darin, eine Weiterentwicklung des vorbekannten Batteriesystems aufzuzeigen, die sich durch ein geringes Gewicht und eine hohe Festigkeit sowie Leistungsfähigkeit auszeichnet. Ferner ist es Aufgabe der Erfindung, ein Fahrzeug, insbesondere ein Luftfahrzeug, mit einem solchen Batteriesystem anzugeben.

Erfindungsgemäß wird diese Aufgabe im Hinblick auf das Batteriesystem durch den Gegenstand des Patentanspruchs 1 und im Hinblick auf das Fahrzeug durch den Gegenstand des Patentanspruchs 13 gelöst.

So beruht die Erfindung auf dem Gedanken, ein Batteriesystem, insbesondere für ein Luftfahrzeug, mit einem gasdicht abgeschlossenen Gehäuse und einem Zellenblock anzugeben, wobei der Zellenblock aus mehreren elektrisch und mechanisch durch Kontaktplatten verbundenen Batteriezellen gebildet ist. Das Gehäuse ist mit einer Unterdruckpumpe zur Erzeugung eines Unterdrucks innerhalb des Gehäuses verbindbar oder verbunden. Innerhalb des Gehäuses herrscht ein Unterdruck, wobei wenigstens eine Gehäuseseitenwand des Gehäuses so flexibel ist, dass die Gehäuseseitenwand durch den innerhalb des Gehäuses wirkenden Unterdruck mit dem Zellenblock verspannt wird.

Vorteilhaft ist bei der Erfindung vorgesehen, die Verspannung zwischen dem Gehäuse und dem Zellenblock des Batteriesystems durch einen Unterdruck zu erwirken, der insbesondere dauerhaft innerhalb des Gehäuses wirkt. Das Gehäuse kann so mit einer relativ geringen Wandstärke ausgebildet sein und ist dennoch ausreichend stabil. Gleichzeitig wird durch die geringere Wandstärke des Gehäuses das Gewicht des Batteriesystems reduziert. Die Verspannung des Gehäuses mit dem Zellenblock sorgt ferner dafür, dass ein guter Wärmeübergang vom Zellenblock an das Gehäuse erreicht wird. Das verbessert die Kühlung der Batteriezellen und erhöht so die Leistungsfähigkeit und Lebensdauer des Batteriesystems.

Generell ist es insbesondere im Hinblick auf den Einsatz des Batteriesystems im Bereich der Luftfahrt, konkret an Bord von Fluggeräten, vorteilhaft, wenn das Batteriesystem einen möglichst hohen Energieinhalt bei möglichst geringer Masse und/oder möglichst geringem Volumen aufweist. Insbesondere sollte daher die Masse von Komponenten des Batteriesystems, die keine Energiespeicherfunktion aufweisen, weitgehend reduziert werden. Das Verhältnis der Masse von energiespeichernden Komponenten, d.h. die Summe der Masse aller Batteriezellen des Batteriesystems, zur Masse des gesamten Batteriesystems sollte folglich möglichst groß sein. Mit der erfindungsgemäßen Konstruktion wird ein besonders gutes Verhältnis zwischen der Summe der Masse der Batteriezellen und der Masse des gesamten Batteriesystems (einschließlich u.a des Gehäuses) erreicht. Insbesondere wird ein Verhältnis von wenigstens 0,85, insbesondere zwischen 0.85 und 0,95, insbesondere zwischen 0,9 und 0,95, erzielt. Mit anderen Worten nimmt die Summe der Masse der Batteriezellen innerhalb des Batteriesystems wenigstens 85%, insbesondere zwischen 85% und 95%, insbesondere zwischen 90% und 95%, der Gesamtmasse des Batteriesystems ein.

Analoges gilt für das Verhältnis zwischen dem kumulierten Volumen aller Batteriezellen des Batteriesystems zum Gesamtvolumen des Batteriesystems. Bei der Erfindung wird durch die Unterdruck-Verspannung und damit einhergehender Möglichkeit der Reduktion der Wandstärke des Gehäuses erreicht, dass das Gesamtvolumen des Batteriesystems reduziert wird. Somit ist ein Volumenverhältnis zwischen dem kumulierten Volumen aller Batteriezellen des Batteriesystems zum Gesamtvolumen des Batteriesystems erzielbar, das wenigstes 0,75, insbesondere zwischen 0,75 und 0,95, insbesondere zwischen 0,8 und 0,9, beträgt. Mit anderen Worten nehmen die Batteriezellen innerhalb des Batteriesystems gemeinsam wenigstens 75%, insbesondere zwischen 75% und 95%, insbesondere zwischen 80% und 90%, des Gesamtvolumens des Batteriesystems ein.

Durch einen optional innerhalb des Gehäuses angeordneten Drucksensor zur Steuerung der Unterdruckpumpe ist es vorteilhaft möglich, den Unterdruck innerhalb des Gehäuses zu steuern. Insbesondere kann die Unterdruckpumpe periodisch aktiviert werden, wenn der Unterdruck innerhalb des Gehäuses unter einen vorbestimmten Schwellwert absinkt. Auf diese Weise kann eine Sicherheitsüberwachung implementiert werden. Insbesondere kann der Drucksensor mit einer Steuereinheit verbunden sein, die so angepasst ist, dass ein Steuersignal ausgegeben wird, wenn der Messwert des Drucksensors außerhalb eines vorbestimmten Sicherheitsbereichs liegt.

Ferner kann im Rahmen der Sicherheitsüberwachung eine zeitliche Überwachung eines Druckverlustes erfolgen. Wenn der Unterdruck innerhalb des Gehäuses nicht innerhalb eines vorbestimmten Zeitfensters den Sollwert erreicht oder die zeitlichen Abstände zwischen notwendigen Aktivierungen der Unterdruckpumpe kleiner werden, können mittels der Steuereinheit verschiedene Maßnahmen, beispielsweise die Ausgabe eines Alarmsignals und/oder die Abschaltung des Batteriesystems, eingeleitet werden.

Der Zellenblock weist vorzugsweise eine Elektronikplatine für ein Batterieüberwachungssystem auf, die seitlich entlang der Batteriezellen angeordnet und mit den Kontaktplatten elektrisch verbunden ist. Die Sicherheitsüberwachung kann Teil des Batterieüberwachungssystems sein. Insbesondere kann die Steuereinheit mit dem Batterieüberwachungssystem verbunden sein. Die Steuereinheit stellt insbesondere eine übergeordnete Einheit dar, wobei das Batterieüberwachungssystem einen Teil der Steuereinheit bilden kann. Die Steuereinheit ist in diesem Fall vorzugsweise so angepasst, dass ein Steuersignal empfangen wird, wenn das Batterieüberwachungssystem einen sicherheitskritischen Fehler einer Batteriezelle detektiert. Konkret kann vorgesehen sein, dass das Batterieüberwachungssystem ein Steuersignal an die Steuereinheit sendet, wenn es einen sicherheitskritischen Fehler einer Batteriezelle detektiert.

Die Steuereinheit ist vorzugsweise in ein Master-/Slave-Bus-System integriert. Über das Master-/Slave-Bus-System können mehrere Batteriesysteme miteinander verbunden und einzeln ansteuerbar sein. Konkret ist vorgesehen, dass das Batteriesystem als Teil eines Master-/Slave-Bus-Systems einen Slave bildet. Mehrere Batteriesysteme können so als Slaves in das Bus-System eingebunden werden. Eine übergeordnete Bus-Steuerung bildet den Master, der die einzelnen Slaves, d.h. Batteriesysteme, einzeln ansteuern kann. Die elektronischen Slave-Komponenten sind vorzugsweise als Untereinheiten jeweils in das Batterieüberwachungssystem bzw. Batteriemanagementsystem (BMS) eines Batteriesystems eingebettet. Die elektronischen Slave-Komponenten können insbesondere auf der Elektronikplatine des Batterieüberwachungssystems angeordnet sein.

In einer bevorzugten Ausführungsform ist der Zellenblock durch eine elektrisch isolierende, wärmeleitende Isolierumhüllung ummantelt, wobei die Gehäuseseitenwand direkt an der Isolierumhüllung anliegt. Das Gehäuse weist vorteilhafterweise einen Anschluss für die Unterdruckpumpe auf, der in das Innere des Gehäuses mündet. Die Isolierumhüllung bildet aufgrund ihrer Flexibilität eine ebene Anlegefläche für die Gehäuseseitenwand. So ist sichergestellt, dass eine spaltfreie Anlage der Gehäuseseitenwand an der Isolierumhüllung sowie eine spaltfreie Anlage der Isolierumhüllung an dem Zellenblock besteht. Dies sorgt für eine gute Verspannung und einen guten wärmeleitenden Kontakt, so dass insbesondere ein Wärmeabtransport vom Zellenblock nach außen verbessert ist.

Um ein geringes Gewicht und eine gute Wärmeübertragung zu erreichen, ist erfindungsgemäß vorgesehen, dass wenigstens die Gehäuseseitenwand, insbesondere das gesamte Gehäuse, aus Aluminiumblech gebildet ist. Die Wandstärke der Gehäuseseitenwand, insbesondere des gesamten Gehäuses, beträgt bei dem erfindungsgemäßen Batteriesystem höchstens 2 mm, insbesondere höchstens 1,5 mm, insbesondere höchstens 1,2 mm, insbesondere höchstens 1 mm. Konkret kann das Gehäuse aus einem Aluminiumblech mit der vorgenannten Wandstärke gebildet sein.

Der gute Wärmeübergang vom Zellenblock auf das Gehäuse, der durch die Unterdruck-Verspannung erreicht wird, ermöglicht es vorteilhafterweise, das Batteriesystem effizient passiv zu kühlen. Insbesondere kann dazu auf einer Außenseite der Gehäuseseitenwand wenigstens ein, insbesondere passives, Kühlelement angeordnet sein. Ein optionales, aktives Kühlsystem, kann so gewichtsreduziert ausgelegt werden, oder ggf. vollständig entbehrlich sein. Das reduziert das Gewicht des Batteriesystems und verbessert die Energieeffizenz ohne die Leistungsfähigkeit des Zellenblocks zu beeinträchtigen.

Bevorzugt ist vorgesehen, dass die Unterdruckpumpe elektrisch mit dem Zellenblock verbindbar oder verbunden ist. Insbesondere kann die Unterdruckpumpe durch die Batteriezellen mit elektrischer Energie versorgbar sein oder versorgt werden. Damit ist ein autarkes System geschaffen, welches zumindest nach erstmaliger Inbetriebnahme ohne externe Energieversorgung auskommt.

Insbesondere kann vorgesehen sein, dass die Unterdruckpumpe bei Inbetriebnahme des Batteriesystems einmalig extern aktiviert wird, um den Unterdruck innerhalb des Gehäuses zu erzeugen. Anschließend erfolgt die Stromversorgung der Unterdruckpumpe vorzugsweise ausschließlich durch den Zellenblock. Eine externe Energieversorgung ist damit entbehrlich.

Die Erfindung betrifft ferner ein Fahrzeug, insbesondere ein zumindest teilweise elektrifiziertes Luftfahrzeug, mit einem zuvor beschriebenen Batteriesystem.

Im Folgenden wird die Erfindung anhand eines Ausführungsbeispiels unter Bezugnahme auf die beigefügten Zeichnungen näher erläutert. Darin zeigen
- Fig. 1: eine perspektivische, teilgeschnittene Ansicht eines erfindungsgemäßen Batteriesystems;
- Fig. 2: eine perspektivische Ansicht des Batteriesystems gemäß Fig. 1;
- Fig. 3: eine perspektivische Ansicht des Zellenblocks mit Isolierumhüllung des Batteriesystems gemäß Fig. 1;
- Fig. 4: eine perspektivische Ansicht des Zellenblocks des Batteriesystems gemäß Fig. 1; und
- Fig. 5: eine perspektivische Ansicht der Elektronikplatine des Batteriesystems gemäß Fig. 1.

Das hier beschriebene Batteriesystem umfasst einen, vorzugsweise einen einzigen, Zellenblock 20, der aus mehreren Batteriezellen 21 gebildet ist. Die Batteriezellen 21 sind vorzugsweise mit geringer Packungsdichte aneinander anliegend in versetzten Reihen angeordnet. Als Batteriezellen 21 kommen insbesondere Lithium-Ionen-Rundzellen, vorzugsweise des Typs 18650/2170, zum Einsatz. Der Zellenblock 20 kann eine elektrische Spannung von 48 Volt oder 60 Volt aufweisen. Die elektrische Leistung beträgt zwischen 2,1 kWh und 3,3 kWh. Das Batteriesystem weist vorzugsweise eine Grundfläche von 200 x 200 mm auf.

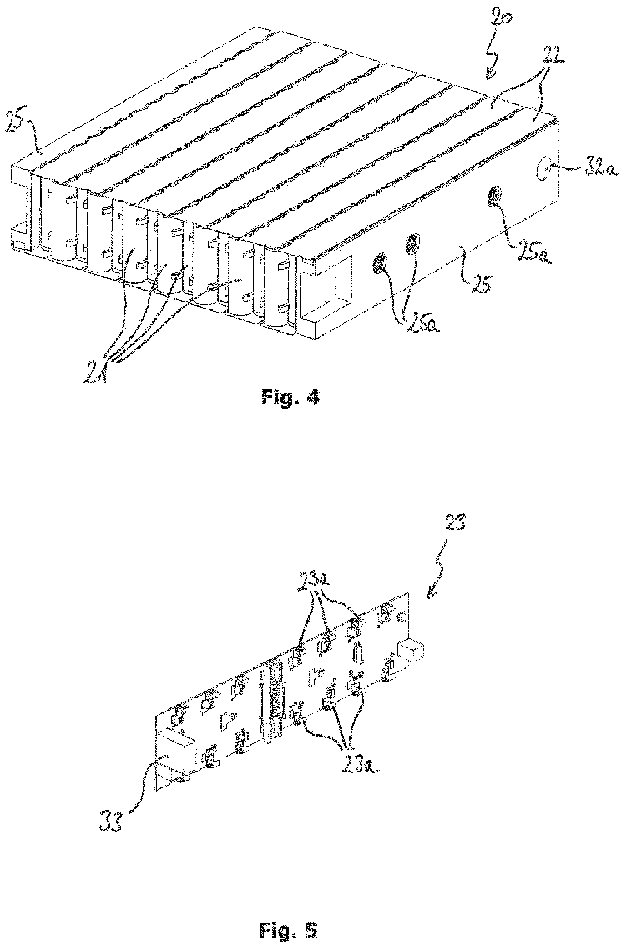

Die Batteriezellen 21 sind elektrisch und mechanisch durch Kontaktplatten 22 verbunden (Fig. 4). Die Kontaktplatten 22 erstrecken sich über die Batteriepole und sind mit diesen verschweißt, vorzugsweise mittels Laserschweißen. Eine Kontaktplatte 22 verbindet jeweils zwei Reihen von Batteriezellen 21.

Seitlich entlang des Zellenblocks 20 ist eine Elektronikplatine 23 angeordnet. Die Elektronikplatine 23 umfasst ein Batterieüberwachungssystem und mehrere Klemmkontakte 23a, die elektrisch mit den Kontaktplatten 22 verbunden sind. Die Klemmkontakte 23a sind so angeordnet, dass jede Reihe von Batteriezellen 21 einzeln überwacht werden kann. Die Elektronikplatine 23 ist im Detail in Fig. 5 gezeigt.

Der Zellenblock 20 ist mit einer Isolierumhüllung 24 umhüllt. Die Isolierumhüllung 24 ist aus einem elektrisch isolierenden und wärmeleitenden Material gebildet. Insbesondere ist die Isolierumhüllung 24 durch eine flexible Folie gebildet, die sich eng an den Zellenblock 20 anlegen kann. Die Isolierumhüllung 24 ummantelt den Zellenblock 20 sowie Anschlussmodule 25, die an den Stirnseiten des Zellenblocks 20 angeordnet sind. Die Anschlussmodule 25 tragen die wesentlichen elektrischen und ggf. pneumatischen bzw. hydraulischen Anschlüsse zur Verbindung des Batteriesystems mit externen Komponenten.

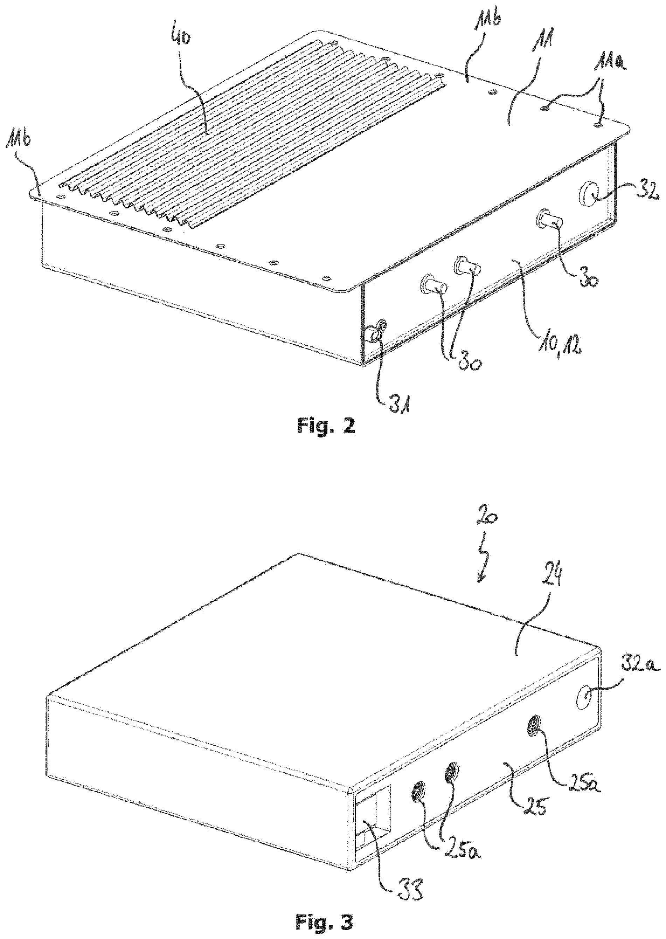

Wie in Fig. 3 gut erkennbar ist, sind in einem stirnseitigen Anschlussmodul 25 des Zellenblocks 20 Zugangsöffnungen 25a für den Anschluss einer Unterdruckpumpe 33 angeordnet. Die Zugangsöffnungen 25 münden innerhalb der Isolierumhüllung. Die Unterdruckpumpe 33 ist vorzugsweise elektrisch mit dem Zellenblock 20 verbindbar und insbesondere mit der Nennspannung (48V und 60V) des Zellenblocks 20 betreibbar. Die Unterdruckpumpe 33 ist mit der Elektronikplatine 23, insbesondere dem Batterieüberwachungs- bzw. Batteriemanagementsystem (BMS), verbunden.

Das Gehäuse 10 des Batteriesystems ist aus einem Aluminiumblech mit einer Wandstärke von vorzugweise 1 mm gebildet. Das Gehäuse 10 weist zwei Gehäusestirnwände 12 auf, die die Anschlussmodule 25 bedecken. Die Seitenflächen des Gehäuses 10 werden durch Gehäuseseitenwände 11 gebildet, die mit den Gehäusestirnwänden 12 gasdicht verschweißt sind. Die Gehäuseseitenwände 11 umhüllen den Zellenblock 20. Vorzugsweise liegen die Gehäuseseitenwände 11 direkt an der Isolierumhüllung 24 des Zellenblocks 20 an.

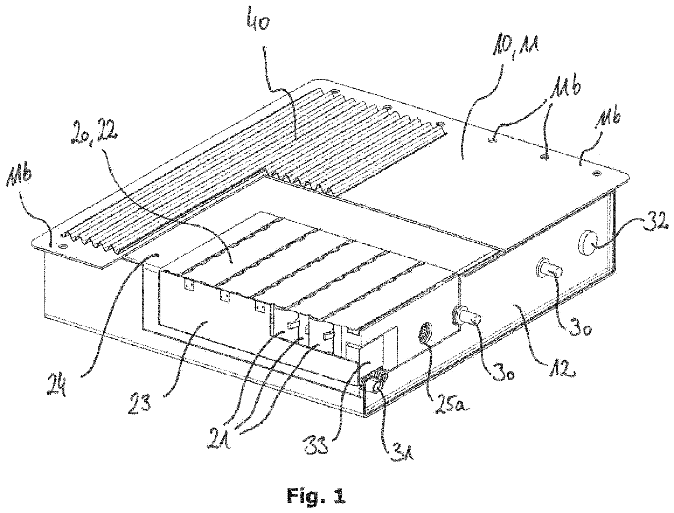

Wie in den Fig.1 und 2 gut erkennbar ist, weist eine obere Gehäuseseitenwand 11 zwei Überstände 11a mit Befestigungsbohrungen 11b auf. Damit ist das Batteriesystems einfach in einem Fahrzeug, insbesondere in einem Flugzeugflügel, montierbar.

Die Gehäuseseitenwand 11, insbesondere die obere und/oder die untere Gehäuseseitenwand 11, kann mit einem Kühlelement 40 ausgestattet sein, wie es in den Fig. 1 und 2 angedeutet ist. Das Kühlelement 40 kann durch eine Aluminium-Wellblech-Struktur gebildet sein. Das Kühlelement 40 ist vorzugsweise gut wärmeleitend auf der Gehäuseseitenwand 11 befestigt.

Das Gehäuse 10 weist mindestens einen Anschluss 30 auf, der sich in das Gehäuse 10 erstreckt und mit der Unterdruckpumpe 33 bzw. Vakuumpumpe verbindbar bzw. verbunden ist. Der Anschluss 30 ist insbesondere in der Gehäusestirnwand 12 angeordnet. Durch die Verbindung mit der Unterdruckpumpe 33 kann ein Unterdruck innerhalb des Gehäuses 10 eingestellt werden. Der Unterdruck bewirkt, dass sich die flexible Isolierumhüllung 24 verformt und sich eng an den Zellenblock 20 anlegt. Bei dem hier dargestellten Ausführungsbeispiel sind drei Anschlüsse 30 in der Gehäusestirnwand 12 vorgesehen.

Generell kann vorgesehen sein, dass wenigstens ein Anschluss 30 ein Rückschlagventil umfasst, so dass nach Abschalten der Unterdruckpumpe 33 der Unterdruck innerhalb des Gehäuses 10 bestehen bleibt. Aus Sicherheitsaspekten ist es außerdem zweckmäßig, wenn das Gehäuse 10 ferner mit einem Überdruckventil 32 ausgestattet ist. Ein solches Überdruckventil 32, das bei Überschreiten eines vorbestimmten Drucks innerhalb des Gehäuses 10 nach außen öffnet, ist in den Fig. 1 und 2 dargestellt. In den Fig. 3 und 4 ist erkennbar, dass das Anschlussmodul 25 eine entsprechende Durchgangsöffnung 32a zur Aufnahme des Überdruckventils 32 umfasst.

Die Gehäuseseitenwand 11, insbesondere die obere und/oder die untere Gehäuseseitenwand 11, weist durch die Materialauswahl (Aluminium) und die geringe Wandstärke (1 mm) eine gewisse Flexibilität auf und wird durch den Unterdruck ebenfalls verformt. Dadurch legt sich die Gehäuseseitenwand 11 eng an die den Zellenblock 20 eng umhüllende Isolierumhüllung 24 an. Das Gehäuse 10 wird so mit dem Zellenblock 20 verspannt.

Die Gehäusestirnwand 12 trägt ferner einen elektrischen Anschluss 31 zur elektrischen Verbindung des Batteriesystems mit externen Komponenten. Der elektrische Anschluss 31 kann eine Datenleitung umfassen, insbesondere zur Verbindung mit einem Master-/Slave-Bus-System. Der elektrische Anschluss 31 ist vorzugsweise außermittig und höhenversetzt angeordnet, um die korrekte elektrische Anbindung an externe Komponenten montagesicher zu gestalten. Vorzugsweise umfasst das Batteriesystem zwei unterschiedlich gepolte elektrische Anschlüsse 31, die in gegenüberliegenden Gehäusestirnwänden 12 angeordnet sind. Beispielsweise kann auf einer vorderen Gehäusestirnwand 12 der Pluspol-Anschluss und auf einer hinteren Gehäusestirnwand 12 der Minuspol-Anschluss angeordnet sein. Damit ist ein hoher Schutzabstand zwischen den elektrischen Anschlüssen 31 geschaffen, der wegen der hohen Stromstärken zweckmäßig ist. Ferner wird auf diese Weise die Verpolungssicherheit erhöht.

Mit dem elektrischen Anschluss 31 kann zumindest indirekt die Unterdruckpumpe 33 verbunden sein, die für die Aufrechterhaltung des Unterdrucks innerhalb des Gehäuses 10 vorgesehen ist. Die Unterdruckpumpe 33 wird somit vom Batteriesystem selbst mit der nötigen Betriebsspannung versorgt, so dass das Gesamtsystem autark ist.

Ferner ist vorgesehen, dass die Unterdruckpumpe 33 selbstregulierend aktiviert wird. Dazu weist das Batteriesystem einen Drucksensor auf, der innerhalb des Gehäuses 10 angeordnet ist. Mittels des Drucksensors, der mit einer entsprechenden Steuereinheit verbunden ist, wird der Unterdruck innerhalb des Gehäuses 10 kontinuierlich überwacht. Sobald der Unterdruck einen vorbestimmten Sollwertbereich verlässt bzw. einen vorbestimmten Sollwert unterschreitet, sendet die Steuereinheit ein Steuersignal an die Unterdruckpumpe 33, so dass die Unterdruckpumpe 33 aktiviert wird. Erreicht der Unterdruck den vorbestimmten Sollwert daraufhin wieder, so sendet die Steuereinheit ein weiteres Steuersignal zum Stoppen der Unterdruckpumpe 33.

Mittels des Drucksensors kann ferner eine Sicherheitsüberwachung implementiert werden. Erkennt beispielsweise die Steuereinheit, dass der Unterdruck nicht ausreichend lange aufrechterhalten werden kann bzw. der Unterdruck zu oft oder zu schnell den vorbestimmten Sollwertbereich verlässt, so ist von einer Undichtigkeit des Gehäuses 10 auszugehen. Die Steuereinheit sendet dann einen Steuerbefehl, der beispielsweise die Ausgabe eines Alarmsignals und/oder die Abschaltung des Batteriesystems initiiert. Ferner kann das Steuersignal ein zweites Batteriesystem aktivieren, das als Backup-Modul in einem Fahrzeug, insbesondere einem Luftfahrzeug vorgesehen sein kann. Das zweite Batteriesystem ist vorzugsweise in das Master-/Slave-Bus-System eingebunden.

Die Steuereinheit kann entsprechende Steuersignale, insbesondere im Hinblick auf sicherheitsrelevante Ereignisse, auch aufgrund von Daten des Batterieüberwachungssystems ausgeben. So kann beispielsweise die Angabe eines Alarmsignals und/oder die Abschaltung des Batteriesystems initiiert werden, wenn anhand der Daten des Batterieüberwachungssystems erkannt wird, dass einzelne Batteriezellen 21 unzureichend geladen werden können und daher ein Zellendefekt anzunehmen ist.

Zur Montage des Zellenblocks 20 im Gehäuse 10 wird der Zellenblock 20 zuerst oben, unten und seitlich mit der flexiblen Isolierumhüllung 24 umhüllt. Die Isolierumhüllung 24 ist vorzugsweise aus einem elektrisch nicht leitenden, jedoch gut wärmeleitenden Material gebildet. Die Isolierumhüllung 24 kann insbesondere durch eine Folie gebildet sein. Die Wandstärke bzw. Folienstärke der Isolierumhüllung 24 beträgt vorzugsweise zwischen etwa 0,1 mm und etwa 0,5 mm, insbesondere etwa 0,3 mm. Vorteilhaft ist vorgesehen, dass die Isolierumhüllung 24 zumindest einseitig mit einer Klebeschicht versehen bzw. einseitig klebend ausgebildet ist.

Die Umhüllung des Zellenblocks 20 mit der Isolierumhüllung 24 erfolgt zweckmäßigerweise in der Art, dass die klebende Seite der Isolierumhüllung 24 eine Außenfläche des umhüllten Zellenblocks 20 bildet. Die dem Zellenblock 20 zugewandte Seite der Isolierumhüllung 24 ist vorzugsweise nicht klebend.

Anschließend werden die Gehäuseseitenwände 11 und die Gehäusestirnwände 12 um den umhüllten Zellenblock 20 gelegt und unter Druck einerseits mit der Isolierumhüllung 24 verklebt sowie andererseits unter Aufrechterhaltung des Fügedrucks miteinander fluiddicht verschweißt. Das Gehäuse 10 und der Zellenblock 20 sind somit fest miteinander verbunden.

Im nächsten Schritt wird die Unterdruckpumpe 33 an das so komplettierte Batteriesystem angeschlossen und das Gehäuse 10 evakuiert bzw. innerhalb des Gehäuses 10 ein Unterdruck aufgebaut. Das Gehäuse 10 wird so fest mit dem Zellenblock 20 verspannt. Der Zellenblock 20 ist auf diese Weise so fest in das Gehäuse 10 eingebettet, dass auf das Gehäuse 10 einwirkende Beschleunigungskräfte, die insbesondere bei Einsatz des Batteriesystems in Luftfahrzeugen erheblich sein können, unmittelbar auf den Zellenblock 20 übertragen werden. Der Zellenblock 20 folgt damit der Beschleunigung oder Verzögerung des Gehäuses 10. Eine durch die Beschleunigung der Masse des Zellenblocks 20 auf das Gehäuse 10 ausgeübte Kraft und damit einhergehende Verformung des Gehäuses 10 wird damit erheblich reduziert.

### Bezugszeichenliste

- 10: Gehäuse
- 11: Gehäuseseitenwand
- 11a: Überstand
- 11b: Befestigungsbohrung
- 12: Gehäusestirnwand
- 20: Zellenblock
- 21: Batteriezelle
- 22: Kontaktplatte
- 23: Elektronikplatine
- 23a: Klemmkontakt
- 24: Isolierumhüllung
- 25: Anschlussmodul
- 25a: Zugangsöffnung
- 30: Anschluss für die Unterdruckpumpe
- 31: elektrischer Anschluss
- 32: Überdruckventil
- 32a: Durchgangsöffnung
- 33: Unterdruckpumpe
- 40: Kühlelement

## Patentansprüche

1. Batteriesystem, insbesondere für ein Luftfahrzeug, mit einem gasdicht abgeschlossenen Gehäuse (10) und einem Zellenblock (20), der aus mehreren elektrisch und mechanisch durch Kontaktplatten (22) verbundenen Batteriezellen (21) gebildet ist, wobei das Gehäuse (10) mit einer Unterdruckpumpe (33) zur Erzeugung eines Unterdrucks innerhalb des Gehäuses (10) verbindbar ist und innerhalb des Gehäuses (10) ein Unterdruck herrscht, und wobei wenigstens eine Gehäuseseitenwand (11) des Gehäuses (10) so flexibel ist, dass die Gehäuseseitenwand (11) durch den innerhalb des Gehäuses (10) wirkenden Unterdruck mit dem Zellenblock (20) verspannt wird,
**dadurch gekennzeichnet, dass**
die Gehäuseseitenwand (11) aus Aluminiumblech mit einer Wandstärke von höchstens 2 mm gebildet ist, wobei innerhalb des Gehäuses (10) ein Drucksensor zur Steuerung der Unterdruckpumpe (33) angeordnet ist, der mit einer Steuereinheit verbunden ist, die so angepasst ist, dass ein Steuersignal ausgegeben wird, wenn der Messwert des Drucksensors außerhalb eines vorbestimmten Sicherheitsbereichs liegt.

2. Batteriesystem nach Anspruch 1,
**dadurch gekennzeichnet, dass**
der Zellenblock (20) eine Elektronikplatine (23) für ein Batterieüberwachungssystem aufweist, die seitlich entlang der Batteriezellen (21) angeordnet und mit den Kontaktplatten (22) elektrisch verbunden ist.

3. Batteriesystem nach Anspruch 1 oder 2,
**dadurch gekennzeichnet, dass**
der Zellenblock (20) durch eine elektrisch isolierende, wärmeleitende Isolierumhüllung (24) ummantelt ist, wobei die Gehäuseseitenwand (11) direkt an der Isolierumhüllung (24) anliegt.

4. Batteriesystem nach einem der vorhergehenden Ansprüche,
**dadurch gekennzeichnet, dass**
das Gehäuse (10) wenigstens einen Anschluss (30) für die Unterdruckpumpe (33) aufweist, der in das Innere des Gehäuses (10) mündet.

5. Batteriesystem nach einem der vorhergehenden Ansprüche,
**dadurch gekennzeichnet, dass**
das gesamte Gehäuse (10) aus Aluminiumblech gebildet ist.

6. Batteriesystem nach einem der vorhergehenden Ansprüche,
**dadurch gekennzeichnet, dass**
das Aluminiumblech eine Wandstärke von höchstens 1,5 mm aufweist.

7. Batteriesystem nach einem der vorhergehenden Ansprüche,
**dadurch gekennzeichnet, dass**
das Aluminiumblech eine Wandstärke von höchstens 1,2 mm aufweist.

8. Batteriesystem nach einem der vorhergehenden Ansprüche,
**dadurch gekennzeichnet, dass**
das Aluminiumblech eine Wandstärke von höchstens 1 mm aufweist.

9. Batteriesystem nach einem der vorhergehenden Ansprüche,
**dadurch gekennzeichnet, dass**
auf einer Außenseite (11a) der Gehäuseseitenwand (11) wenigstens ein Kühlelement (40) angeordnet ist.

10. Batteriesystem nach einem der vorhergehenden Ansprüche,
**dadurch gekennzeichnet, dass**
die Unterdruckpumpe (33) elektrisch mit dem Zellenblock (20) verbindbar oder verbunden ist und durch die Batteriezellen (21) mit elektrischer Energie versorgbar ist oder versorgt wird.

11. Batteriesystem nach einem der Ansprüche 2 bis 10,
**dadurch gekennzeichnet, dass**
die Steuereinheit mit dem Batterieüberwachungssystem verbunden ist, wobei die Steuereinheit so angepasst ist, dass ein Steuersignal ausgegeben wird, wenn das Batterieüberwachungssystem einen sicherheitskritischen Fehler einer Batteriezelle detektiert.

12. Batteriesystem nach einem der Ansprüche 2 bis 11,
**dadurch gekennzeichnet, dass**
die Steuereinheit in ein Master/Slave-Bus-System der Elektronikplatine (23) integriert ist.

13. Fahrzeug mit einem Batteriesystem nach einem der vorhergehenden Ansprüche.

14. Fahrzeug nach Anspruch 13,
**dadurch gekennzeichnet, dass**
das Fahrzeug ein zumindest teilweise elektrifiziertes Luftfahrzeug ist.

## Claims

1. A battery system, in particular for an aircraft, having a housing (10), which is sealed gas-tight, and with a cell block (20), which is formed from a plurality of battery cells (21) connected electrically and mechanically by contact plates (22), wherein the housing (10) can be connected to a vacuum pump (33) in order to generate a vacuum within the housing (10) and a vacuum prevails within the housing (10), and wherein at least one housing side wall (11) of the housing (10) is so flexible that the housing side wall (11) is tensioned together with the cell block (20) by the vacuum acting within the housing (10),
**characterized in that**
the housing side wall (11) is formed from aluminium sheet with a wall thickness of a maximum of 2 mm, wherein within the housing (10) a pressure sensor is arranged for controlling the vacuum pump (33), which is connected with a control unit which is adapted so that a control signal is emitted when the measured value of the pressure sensor lies outside a predetermined safety range.

2. The battery system according to Claim 1,
**characterized in that**
the cell block (20) has an electronics board (23) for a battery monitoring system, which is arranged laterally along the battery cells (21) and is electrically connected to the contact plates (22).

3. The battery system according to Claim 1 or 2,
**characterized in that**
the cell block (20) is encased by an electrically insulating, heat-conducting insulating casing (24), wherein the housing side wall (11) lies directly against the insulating casing (24).

4. The battery system according to one of the preceding claims,
**characterized in that**
the housing (10) has at least one connection (30) for the vacuum pump (33), which opens out into the interior of the housing (10).

5. The battery system according to one of the preceding claims,
**characterized in that**
the entire housing (10) is formed from aluminium sheet.

6. The battery system according to one of the preceding claims,
**characterized in that**
the aluminium sheet has a wall thickness of a maximum of 1.5 mm.

7. The battery system according to one of the preceding claims,
**characterized in that**
the aluminium sheet has a wall thickness of a maximum of 1.2 mm.

8. The battery system according to one of the preceding claims,
**characterized in that**
the aluminium sheet has a wall thickness of a maximum of 1 mm.

9. The battery system according to one of the preceding claims,
**characterized in that**
at least one cooling element (40) is arranged on an outer side (11a) of the housing side wall (11).

10. The battery system according to one of the preceding claims,
**characterized in that**
the vacuum pump (33) is electrically connectable or connected to the cell block (20) and can be or is supplied with electrical energy by the battery cells (21) .

11. The battery system according to one of Claims 2 to 10,
**characterized in that**
the control unit is connected to the battery monitoring system, wherein the control unit is adapted so that a control signal is emitted when the battery monitoring system detects a safety-critical fault of a battery cell.

12. The battery system according to one of Claims 2 to 11,
**characterized in that**
the control unit is integrated into a master/slave bus system of the electronics board (23).

13. A vehicle with a battery system according to one of the preceding claims.

14. The vehicle according to Claim 13,
**characterized in that**
the vehicle is an aircraft which is electrified at least in part.

## Revendications

1. Système de batterie, en particulier pour un aéronef, avec un boîtier (10) fermé de manière étanche au gaz et un bloc d'éléments (20) qui est formé par plusieurs éléments de batterie (21) raccordés électriquement et mécaniquement par des plaques porte-contacts (22), dans lequel le boîtier (10) peut être raccordé à une pompe à vide (33) pour la génération d'une dépression à l'intérieur du boîtier (10) et une dépression règne à l'intérieur du boîtier (10), et dans lequel au moins une paroi latérale de boîtier (11) du boîtier (10) est si flexible que la paroi latérale de boîtier (11) est serrée par la dépression régnant à l'intérieur du boîtier (10) contre le bloc d'éléments (20), **caractérisé en ce que** la paroi latérale de boîtier (11) est formée par une tôle d'aluminium avec une épaisseur de paroi de 2 mm tout au plus, dans lequel un capteur de pression est disposé à l'intérieur du boîtier (10) pour commander la pompe à vide (33), lequel est relié à une unité de commande adaptée de telle sorte qu'un signal de commande est émis si la valeur de mesure du capteur de pression se situe en-dehors d'une plage de sécurité prédéfinie.

2. Système de batterie selon la revendication 1, **caractérisé en ce que** le bloc d'éléments (20) présente une carte électronique (23) pour un système de surveillance de batterie, laquelle est disposée latéralement le long des éléments de batterie (21) et est raccordée électriquement aux plaques porte-contacts (22).

3. Système de batterie selon la revendication 1 ou 2, **caractérisé en ce que** le bloc d'éléments (20) est enveloppé par une enveloppe isolante thermoconductrice d'isolation électrique (24), dans lequel la paroi latérale de boîtier (11) repose directement contre l'enveloppe isolante (24).

4. Système de batterie selon l'une des revendications précédentes,
**caractérisé en ce que** le boîtier (10) présente au moins un raccord (30) pour la pompe à vide (33), lequel débouche à l'intérieur du boîtier (10).

5. Système de batterie selon l'une des revendications précédentes,
**caractérisé en ce que** l'ensemble du boîtier (10) est formé par une tôle d'aluminium.

6. Système de batterie selon l'une des revendications précédentes,
**caractérisé en ce que** la tôle d'aluminium présente une épaisseur de paroi de 1,5 mm tout au plus.

7. Système de batterie selon l'une des revendications précédentes,
**caractérisé en ce que** la tôle d'aluminium présente une épaisseur de paroi de 1,2 mm tout au plus.

8. Système de batterie selon l'une des revendications précédentes,
**caractérisé en ce que** la tôle d'aluminium présente une épaisseur de paroi de 1 mm tout au plus.

9. Système de batterie selon l'une des revendications précédentes,
**caractérisé en ce que**, sur un côté extérieur (11a) de la paroi latérale de boîtier (11), au moins un élément de refroidissement (40) est disposé.

10. Système de batterie selon l'une des revendications précédentes,
**caractérisé en ce que** la pompe à vide (33) peut être raccordée, ou est raccordée électriquement au bloc d'éléments (20) et peut être alimentée, ou est alimentée en énergie électrique par les éléments de batterie (21).

11. Système de batterie selon l'une des revendications 2 à 10,
**caractérisé en ce que** l'unité de commande est raccordée au système de surveillance de batterie, dans lequel l'unité de commande est adaptée de manière à ce qu'un signal de commande est émis lorsque le système de surveillance de batterie détecte une erreur critique pour la sécurité d'un élément de batterie.

12. Système de batterie selon l'une des revendications 2 à 11,
**caractérisé en ce que** l'unité de commande est intégrée dans un système de bus maître/esclave de la carte électronique (23).

13. Véhicule avec un système de batterie selon l'une des revendications précédentes.

14. Véhicule selon la revendication 13,
**caractérisé en ce que** le véhicule est un aéronef au moins en partie électrifié.
